# EUROPEAN PATENT APPLICATION

(11) **EP 4 718 472 A1**
(43) Date of publication of application: **01.04.2026**
(21) Application number: 24275107.1
(22) Date of filing: 30.09.2024
(51) Int. Cl.: G21D 3/08, G21D 5/06

(54) **A NUCLEAR FISSION REACTOR SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A nuclear fission reactor system (100) provided with a nuclear reactor unit (200). The nuclear reactor unit (200) may comprise a moderator fluid tank (202) for containment of a moderator fluid (204). The moderator fluid tank (202) may comprise a moderator tank fluid flow inlet (210) and a moderator fluid tank fluid flow outlet (212). The nuclear fission reactor system (100) may comprise a moderator fluid temperature control system (220) operable to control the temperature of the moderator fluid (204) at the moderator tank fluid flow inlet (210).

## Description

### FIELD

The present disclosure relates to a nuclear fission reactor system.

### BACKGROUND

Nuclear fission reactor systems are used to provide power in many different applications, operating as a heat engine system. By way of example, the nuclear reactor core is provided as a heat source to heat a working fluid which is passed through a closed cycle comprising a compressor and turbine to rotate a shaft from which other machines can be driven (for example an electrical generator). The nuclear fission reactor system comprises many components and inter-linked sub-systems. Controlling the operating temperature of components of a nuclear fission reactor system is essential for its longevity and overall safe running.

Hence a nuclear fission reactor system and/or the components and/or sub-systems of the nuclear fission reactor system which, in use, result in increased safety and efficiency of the nuclear fission reactor system are highly desirable.

### SUMMARY

According to the present disclosure there is provided an apparatus and method as set forth in the appended claims. Other features of the invention will be apparent from the dependent claims, and the description which follows.

Accordingly, there may be provided a nuclear fission reactor system (100) provided with a nuclear reactor unit (200). The nuclear reactor unit (200) may comprise a moderator fluid tank (202) for containment of a moderator fluid (204).

The moderator fluid tank (202) may comprise a moderator tank fluid flow inlet (210) and a moderator fluid tank fluid flow outlet (212).

The nuclear fission reactor system (100) may comprise a moderator fluid temperature control system (220) operable to control the temperature of the moderator fluid (204) at the moderator tank fluid flow inlet (210).

The moderator fluid temperature control system (220) may comprise a moderator fluid heat transfer unit (230).

The moderator fluid heat transfer unit (230) may have a heat transfer unit flow inlet (232) in flow communication with the moderator fluid tank fluid flow outlet (212).

The moderator fluid heat transfer unit (230) may have a heat transfer unit flow outlet (234) in flow communication with the moderator tank fluid flow inlet (210).

The moderator fluid tank fluid flow outlet (212), the heat transfer unit flow inlet (232), the heat transfer unit flow outlet (234), the moderator tank fluid flow inlet (210) and the moderator fluid tank (202) may be provided in series to define a first moderator fluid flow path (208).

The moderator fluid heat transfer unit (230) may have a coolant flow inlet (236) and a coolant flow outlet (238).

The fluid heat transfer unit coolant flow inlet (236) may be in heat transfer communication with a heat sink (700) via a first coolant duct (710). A first flow control valve (720) may be provided in the first coolant duct (710).

The first flow control valve (720) may be controlled in response to the pressure of working fluid (404) entering the nuclear reactor unit (200) such that if the pressure of the working fluid (404) entering the nuclear reactor unit (200) is below a predetermined value, the first flow control valve (720) is closed.

The first flow control valve (720) may be controlled in response to the temperature of the working fluid (404) entering the nuclear reactor unit (200) such that if the temperature of the working fluid (404) entering the nuclear reactor unit (200) is above a predetermined value, the first flow control valve (720) is closed.

The nuclear fission reactor system (100) may further comprise a moderator fluid delivery system (240) comprising a condenser (242).

The moderator fluid delivery system (240) may be configured to deliver the moderator fluid (204) evaporated from the moderator fluid tank (202) by the nuclear reactor unit (200) to the condenser (242).

The moderator fluid delivery system (240) may be configured to deliver condensate (244) back to the moderator fluid tank (202) via the moderator fluid heat transfer unit (230).

The moderator fluid delivery system (240) may comprise a moderator fluid tank fluid flow outlet duct (246) which extends between the moderator fluid tank (202) and the condenser (242).

The moderator fluid delivery system (240) may comprise a moderator fluid heat transfer unit intake duct (248) which extends between the condenser (242) and the moderator fluid heat transfer unit (230).

The condenser (242) may have a coolant flow inlet (243) and a coolant flow outlet (245).

The condenser coolant flow inlet (243) may be in heat transfer communication with the heat sink (700) via a second coolant duct (726).

The second coolant duct (726) may be in fluid communication with the heat sink (700) via a second flow control valve (722).

The second flow control valve (722) may be controllable in response to the temperature of the working fluid (404) exhausted from the nuclear reactor unit (200).

The second flow control valve (722) may be controllable in response to the temperature of the working fluid (404) exhausted from the nuclear reactor unit (200) such that the rate of coolant flow through the second flow control valve (722) and the second coolant duct (726) to the condenser coolant flow inlet (243) is controlled in dependence of the temperature of the working fluid (404) being exhausted from the nuclear reactor unit (200).

The first coolant duct (710) may be in fluid communication with the second flow control valve (722) such that the first coolant flow control valve (720) is between the second flow control valve (722) and the fluid heat transfer unit coolant flow inlet (236) along the first coolant duct (710).

The second flow control valve (722) may be controllable in response to the temperature of the working fluid (404) exhausted from the nuclear reactor unit (200). The second flow control valve (722) may be controllable in response to the temperature of the working fluid (404) exhausted from the nuclear reactor unit (200) such that the rate of coolant flow through the second flow control valve (722) to the first coolant flow control valve (720) and the fluid heat transfer unit coolant flow inlet (236) is controlled in dependence of the temperature of the working fluid (404) being exhausted from the nuclear reactor unit (200).

The second flow control valve (722) may be in fluid communication with the heat sink (700) via a third flow control valve (728).

The third flow control valve (728) may be controllable in dependence of the temperature of the nuclear reactor unit (200).

The nuclear fission reactor system (100) may further comprise a nuclear reactor unit outer wall (274) which extends around the moderator fluid tank (202) to define a nuclear reactor unit housing (272) operable to retain the moderator fluid (204).

The nuclear reactor unit housing (272) may at least in part define the first moderator fluid flow path (208) between the moderator fluid tank fluid flow outlet (212) and the moderator tank fluid flow inlet (210).

The nuclear fission reactor system (100) may further comprise an enclosure unit (140) provided around the nuclear reactor unit housing (272).

The enclosure unit (140) may define a first enclosure unit wall (142) and a second enclosure unit wall (144). The second enclosure unit wall (144) may be located around and spaced apart from the first enclosure unit wall (142) to define an enclosure shielding volume (146) therebetween.

The enclosure shielding volume (146) may be configured to be in flow communication with a supply of the moderator fluid (204).

The enclosure shielding volume (146) may be in fluid communication with the moderator fluid tank (202) so as to enable a flow of the moderator fluid (204) from the enclosure shielding volume (146) to the moderator fluid tank (202).

The enclosure shielding volume (146) may be fluid communication with the moderator fluid tank fluid flow outlet duct (246). The second enclosure unit wall (144) may comprise a vent (150) to enable the exhaust of fluid from the enclosure shielding volume (146).

The nuclear fission reactor system (100) may further comprise a fuel assembly (400) located in the moderator fluid tank (202). The fuel assembly (400) may be configured to define a fluid flow path (414) for working fluid (404) between a pressure tube flow inlet (410) and a pressure tube flow outlet (412) in a first direction (D1) along a pressure tube (402). The portion of the first moderator fluid flow path (208) in the moderator fluid tank (202) may flow in a second direction (D2), the second direction (D2) being in an opposite direction to the first direction (D1).

The moderator fluid temperature control system (220) may be operable to control the moderator fluid heat transfer unit (230) to transfer heat to the moderator fluid (204) and/or to transfer heat from the moderator fluid (204) to thereby control the temperature of the moderator fluid (204) at the moderator tank fluid flow inlet (210).

There may be provided a method of control of a nuclear fission reactor system (100) provided with a nuclear reactor unit (200).

The nuclear reactor unit (200) may comprise a moderator fluid tank (202) for containment of a moderator fluid (204). The moderator fluid tank (202) may comprise a moderator tank fluid flow inlet (210) and a moderator fluid tank fluid flow outlet (212). The nuclear fission reactor system (100) may further comprise a moderator fluid temperature control system (220) operable to control the temperature of the moderator fluid (204) at the moderator tank fluid flow inlet

(210). The method may comprise controlling the temperature of the moderator fluid (204) at the moderator tank fluid flow inlet (210) to thereby control the temperature of the moderator fluid (204) between the moderator tank fluid flow inlet (210) and the moderator fluid tank fluid flow outlet (212).

There may be provided a fuel assembly (400) for a nuclear fission reactor system (100). The fuel assembly (400) may extend along a longitudinal axis (420). The fuel assembly (400) may comprise a pressure tube (402).

The fuel assembly (400) may comprise a single sleeve member (430) provided radially inward of a radially inner surface (432) of the pressure tube (402). The sleeve member (430) may define a chamber (434) which extends along a length of the sleeve member (430). The chamber (434) may comprise, in series, a first sub-chamber (436), a second sub-chamber (438) and a third sub-chamber (440), wherein the first sub-chamber (436) defines a chamber flow inlet (442) and the third sub-chamber (440) defines chamber flow outlet (444).

The fuel assembly (400) may comprise a fuel compact unit (500) located in the second sub-chamber (438) within the sleeve member (430) such that a clearance gap (522) is maintained between a radially inner surface (450) of the sleeve member (430) and the fuel compact unit (500) to define a sleeve member flow passage (452).

An insulation gap (604) may be maintained between the pressure tube (402) and the single sleeve member (430).

A first insulation fluid (606) may be provided in the insulation gap (604), wherein the first insulation fluid (606) comprises at least one of argon, air/nitrogen, carbon dioxide, krypton or xenon.

A single fuel compact unit (500) may be located in the second sub-chamber (438).

The fuel compact unit (500) may be integrally formed.

There may be provided a nuclear reactor unit (200) for a nuclear fission reactor system (100).

The nuclear reactor unit (200) may comprise a fuel assembly (400) according to the present disclosure.

The nuclear reactor unit (200) may comprise a support member (800) comprising a first side (802), a second side (804), and a location passage (806) which extends from a first opening (808) on the first side (802) to a second opening (810) on the second side (804).

The pressure tube (402) may extend from the first side (802).

The single sleeve member (430) may extend from the second side (804) through the second opening (810), along the location passage (806), to the first opening (808).

The support member (800) may define an insulator fluid supply passage (812) which is in fluid communication with the insulation gap (604) and a source of insulator fluid (610).

The insulator fluid supply passage (812) may be in fluid communication with the insulation gap (604) via a support member clearance gap (814) maintained between the single sleeve member (430) and the support member (800).

A first seal (822) may be provided between the single sleeve member (430) and the support member (800) in the location passage (806). The first seal (822) may be provided between the second side (804) and the insulator fluid supply passage (812) along the location passage (806).

A second seal (824) may be provided between the single sleeve member (430) and the support member (800) in the location passage (806). The second seal (824) may be located between the first seal (822) and the insulator fluid supply passage (812) along the location passage (806). The second seal (824) may be provided spaced apart from the first seal (822) along the location passage (806) to define a seal clearance volume (828) therebetween.

The support member (800) may define a working fluid vent passage (820) in fluid communication with the seal clearance volume (828).

A seal spacer member (826) may be provided between the first seal (822) and the second seal (824).

The seal spacer member (826) may span an opening to the working fluid vent passage (820).

The seal spacer member (826) may define an aperture (830) for the passage of working fluid (404) therethrough.

The support member (800) may define a plurality of location passages (806), at least some of the plurality of location passages (806) being in fluid communication with the insulator fluid source (610) via the insulator fluid supply passage (812) and/or at least some of the plurality of location passages (806) being in fluid communication with the working fluid vent passage (820).

There may be provided a nuclear fission reactor system (100) comprising a nuclear reactor unit (200) according to the present disclosure wherein the chamber flow inlet (442) is operable to be in fluid communication with a working fluid source (406).

There may be provided a nuclear fission reactor system (100) comprising a nuclear reactor unit (200) according to the present disclosure wherein the chamber flow outlet (444) is operable to be in fluid communication with a working fluid exhaust (408).

There may be provided a nuclear fission reactor system (100) comprising a nuclear reactor unit (200) according to the present disclosure wherein the insulation fluid (606) is a different fluid to the working fluid (404).

Hence there is a provided a nuclear fission reactor system, and the components and sub-systems of a nuclear fission reactor system, which, in use, result in increased safety and efficiency compared to examples of the related art.

### BRIEF DESCRIPTION OF THE FIGURES

Embodiments of the invention will now be described by way of example only with reference to the figures, in which:
Figure 1 shows a diagrammatic representation of a heat engine system (e.g. a power plant) according to the present disclosure;
Figure 2 shows a perspective view of a nuclear reactor unit according to the present disclosure;
Figure 3 shows a view of the nuclear reactor unit shown in figure 2 with parts of the nuclear reactor unit outer wall removed;
Figure 4 shows a side sectional view of the nuclear reactor unit incorporated with other elements of a nuclear fission reactor system according to the present disclosure;
Figure 5 shows a sectional view through the nuclear reactor unit shown in figures 2 to 4;
Figure 6 shows a view on line A-A through the fuel assemblies as illustrated in Figure 5;
Figure 7 shows a diagrammatic representation of the nuclear fission reactor system of the present disclosure;
Figure 8 shows an end on cross-sectional view through a fuel assembly of the present disclosure;
Figure 9 shows a perspective cross-sectional view through a fuel assembly of the present disclosure;
Figure 10 shows a side cross-sectional view through a fuel assembly of the present disclosure;
Figure 11 shows an enlarged view of a section of the side cross-sectional view through the fuel assembly shown in figure 10;
Figure 12 shows an enlarged view of a cross-section of a fuel assembly according to the present disclosure mounted with a support member according to the present disclosure;
Figure 13 shows a cross-sectional view of a support member according to the present disclosure as shown in figure 12; and
Figure 14 shows a view of a layer of the support member shown in figure 13.

### DETAILED DESCRIPTION

The present disclosure relates to a nuclear fission reactor system 100 comprising (i.e. provided with) a nuclear reactor unit 200. The present disclosure also relates to a fuel assembly 400 for a nuclear fission reactor system 100. The present disclosure also relates to a nuclear fission reactor system 100 comprising a nuclear reactor unit 200 comprising a fuel assembly 400. The present disclosure also relates to a heat engine system 300 and a method of operation of a heat engine system 300. The heat engine system 300 may comprise a heat source 260 and the heat source 260 may form part of a nuclear fission reactor system 100. The nuclear reactor unit 200 may define the heat source 260.

The present disclosure may also relate to a facility or vehicle 10 comprising any aspect of the present disclosure. The vehicle 10 may be a land-based vehicle or a watercraft such as a surface vessel or a submersible such as a submarine.

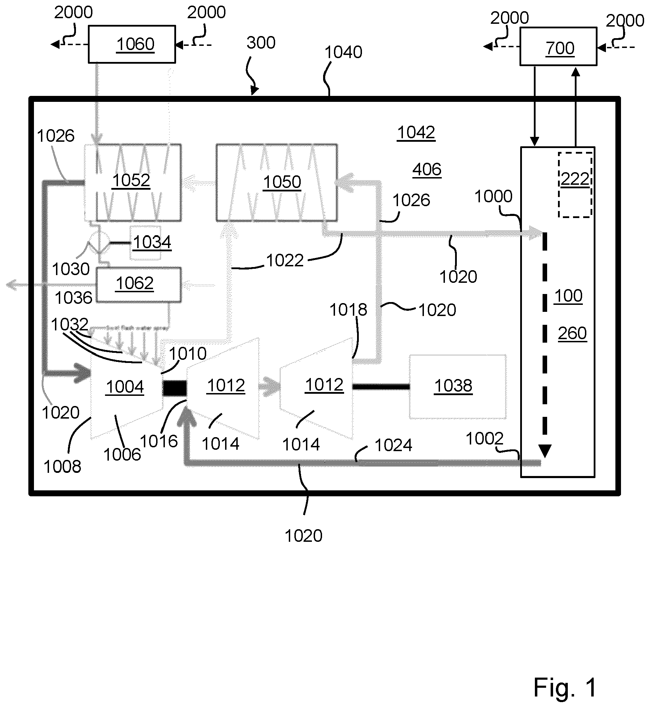

Figure 1 illustrates a heat engine system 300. The heat engine system 300 may comprise a heat source 260 provided as a nuclear fission reactor system 100. The heat source 260 is provided with a heat source inlet 1000 and a heat source outlet 1002. In operation, a working fluid 404 passes into the heat source 260 through the heat source inlet 1000 and, having been heated by the heat source 260, is then exhausted via the heat source outlet 1002. The working fluid 404 may be, or comprise, nitrogen.

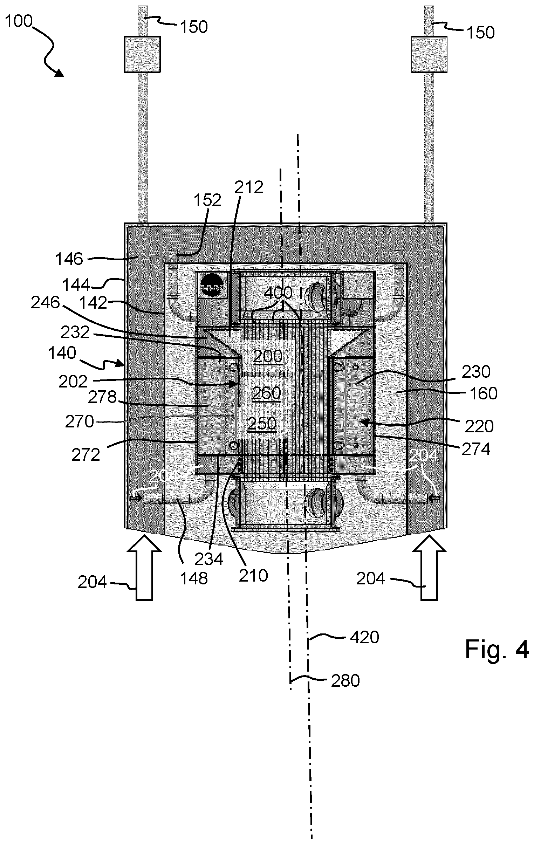

As illustrated in figures 4, 5, 6, the nuclear fission reactor system 100 may comprise a nuclear reactor unit 200 comprising a fuel assembly 400 (or a plurality of fuel assemblies 400) according to the present disclosure. The fuel assembly 400 may define at least part of the heat source 260.

The heat engine system 300 may comprise a compressor 1004 defining a compressor fluid flow path 1006 extending from a compressor inlet 1008 to a compressor outlet 1010.

The heat engine system 300 may comprise a turbine system 1012 defining a turbine fluid flow path 1014 extending from a turbine inlet 1016 to a turbine outlet 1018. The turbine system 1012 may be coupled to a generator 1038 by any conventional means to generate electricity.

Both the compressor fluid flow path 1006 and the turbine fluid flow path 1014 are configured for the flow of the working fluid 404 therethrough.

As illustrated in figure 1, the compressor 1004, heat source 260 and turbine system 1012 define part of a working fluid flow circuit 1020 along which the working fluid 404 flows. The working fluid flow circuit 1020 further comprises a compressor-to-heat-source duct 1022 which extends between the compressor outlet 1010 and the heat source inlet 1000. The working fluid flow circuit 1020 further comprises a heat-source-to-turbine duct 1024 which extends between the heat source outlet 1002 and the turbine inlet 1016. The working fluid flow circuit 1020 further comprises a turbine-to-compressor duct 1026 which extends between the turbine outlet 1018 and the compressor inlet 1008.

The heat engine system 300 may further comprise a wet compression fluid source 1030 in fluid communication with the compressor fluid flow path 1006. The wet compression fluid source 1030 may comprise a pump 1034 The wet compression fluid source 1030 may be in fluid communication with the compressor fluid flow path 1006 via spray units 1032 at the compressor inlet 1008 and/or between compressor inlet 1008 and compressor outlet 1010 into the compressor fluid flow path 1006. The spray units 1032 may be configured to generate droplets having a diameter of 10 microns or less.

In examples where present, the addition of wet compression fluid (e.g. water) to the working fluid 404 may be controlled such that the working fluid 404 is in a 100% relative humidity state as it passes through the compressor 1004 (i.e. during compression). As is known in the art, the act of compressing water droplets along with the working fluid 404 will result in the droplets evaporating, maintaining the 100% relative humidity state.

Put another way, in operation, the fluid passing along at least part of the working fluid flow circuit 1020 may comprise nitrogen and water vapour such that the working fluid 404 is humidified. That is to say, the relative humidity of the working fluid 404 may be 100%.

The heat engine system 300 may further comprise a housing 1040 which is operable to be sealed to define a system reservoir 1042 in which the compressor 1004, heat source 260 (i.e. nuclear fission reactor system 100), turbine system 1012 and working fluid flow circuit 1020 are located. The system reservoir 1042 may also be provided as the working fluid source 406.

The heat engine system 300 may further comprise a recuperator 1050. The heat engine system 300 may further comprise a heat exchanger 1052. The compressor-to-heat-source duct 1022 may provide fluid communication between the compressor outlet 1010 and the heat source inlet 1000 via the recuperator 1050. The turbine-to-compressor duct 1026 may provide fluid communication between the turbine outlet 1018 and the compressor inlet 1008 via the recuperator 1050 and the heat exchanger 1052.

The recuperator 1050 is configured to recover lost heat from the working fluid 404, for example by adding heat from the working fluid 404 passing through/along the turbine-to-compressor duct 1026 (from the turbine 1012) to working fluid 404 passing through/along the compressor-to-heat-source duct 1022 (from the compressor 1004, being delivered to the heat source 260).

The heat exchanger 1052 may be in heat flow communication with a second heat sink 1060 to thereby remove heat energy from working fluid 404 flowing along the turbine-to-compressor duct 1026. In some examples, the first heat sink 700 and second heat sink 1060 may be the same entity (for example a body of water - e.g. a lake, the sea).

In examples in which there is provided a recuperator 1050, the heat exchanger 1052 may be in heat flow communication with a second heat sink 1060 to thereby remove heat energy from working fluid 404 flowing along the turbine-to-compressor duct 1026 after it has been exhausted from the recuperator 1050.

The heat exchanger 1052 may be configured to generate a condensate fluid which is delivered to the fluid source 1030. That is to say, the heat exchanger 1052 may be configured to operate as a condenser to generate a condensate fluid which is delivered to the wet compression fluid source 1030. The wet compression fluid source 1030 may be in fluid communication with the compressor fluid flow path 1006 via a water heater 1062. The water heater 1062 may be in heat flow communication with the recuperator 1050 to receive heat energy therefrom. The water heater 1062 may exhaust fluid from the recuperator 1050 to a cooling system via a duct 1036.

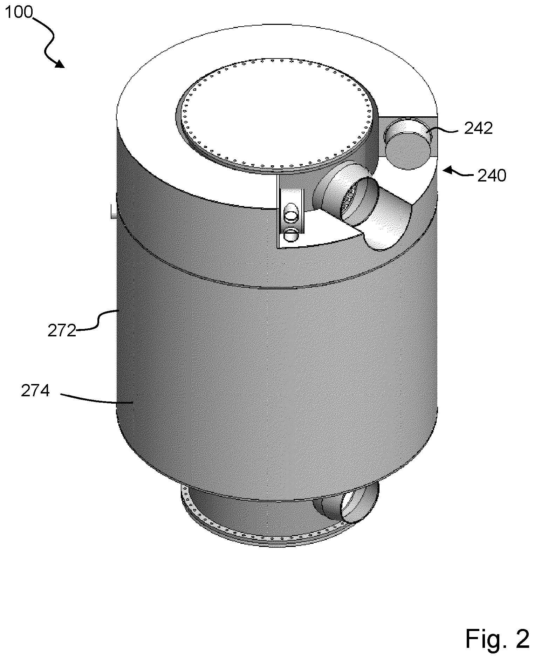

Aspects of the nuclear reactor unit 200 are illustrated in figures 2 to 6.

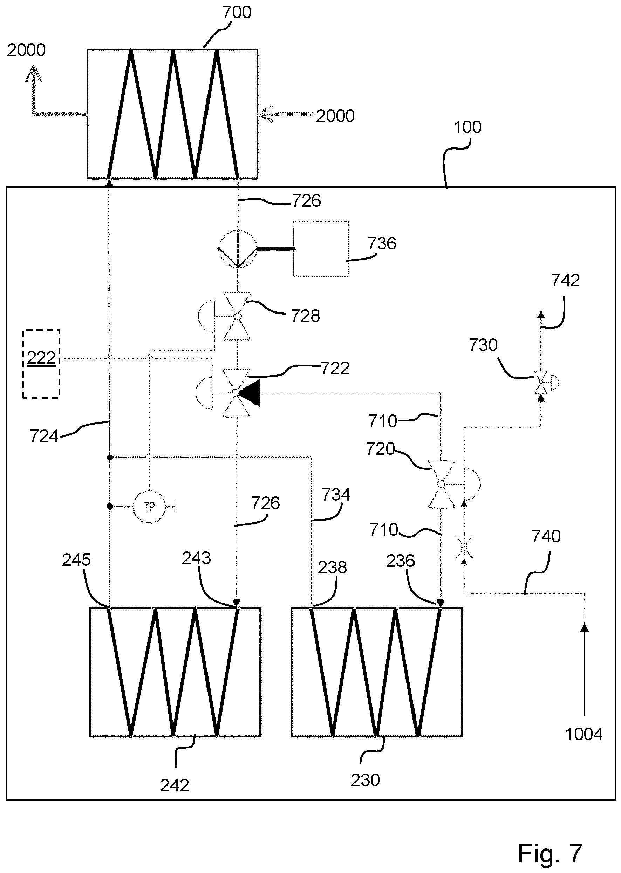

Figures 2 to 7 illustrate different features of the nuclear fission reactor system 100 of the present disclosure. Figure 2 to 6 illustrate an example of the physical arrangement of features of the nuclear fission reactor system 100. Figure 7 shows a diagrammatic representation of the nuclear fission reactor system 100.

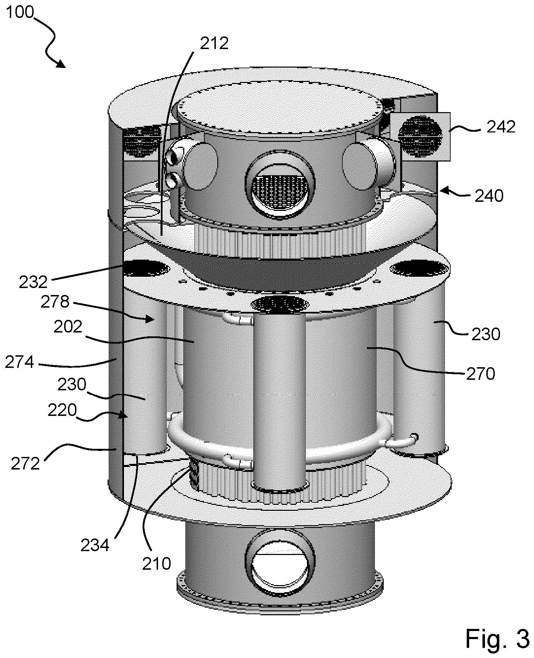

As illustrated in figures 3 to 5, the nuclear reactor unit 200 may comprise a moderator fluid tank 202 for containment of a moderator fluid 204.

As is known in the art, a moderator is a material intentionally placed in a nuclear reactor core 260 to slow neutrons down from their initial fast speeds without first getting "non-productively" absorbed by the nuclear fuel (for example in a fuel compact unit 500). Hence a moderator may allow the nuclear reactor core 260 to sustain a neutron chain reaction. The moderator fluid 204 may also act as a medium for decay heat removal from the reactor core 260.

The moderator fluid 204 may be water (for example, fresh water or seawater).

The working fluid 404 may be fluidly isolated from the moderator fluid 204.

The working fluid 404 may be pressurised. The moderator fluid 204 may be unpressurised.

As shown in figures 3, 4, 5, the moderator fluid tank 202 may be defined by a moderator fluid tank wall 270. The nuclear reactor unit 200 may further comprise a nuclear reactor unit outer wall 274 which defines a nuclear reactor unit housing 272 (or "tank"), which bounds (e.g. surrounds, encircles, extends around) and is spaced apart from the moderator fluid tank wall 270 to define a moderator fluid flow duct 278 therebetween. Hence the nuclear reactor unit housing 272 (or "tank") is operable to retain moderator fluid 204.

The moderator fluid tank 202 (i.e. the moderator fluid tank wall 270) may comprise a moderator tank fluid flow inlet 210 configured for the passage of the moderator fluid 204 into the moderator fluid tank 202. The moderator fluid tank 202 (i.e. the moderator fluid tank wall 270) may comprise a moderator fluid tank fluid flow outlet 212 configured for the passage of the moderator fluid 204 out of the moderator fluid tank 202. The nuclear fission reactor system 100 may further comprise a moderator fluid temperature control system 220 operable to control the temperature of the moderator fluid 204 at the moderator tank fluid flow inlet 210.

The moderator fluid temperature control system 220 may comprise a controller 222 which is operable to control parts of the moderator fluid temperature control system 220. The controller 222 is shown diagrammatically in figures 1, 7.

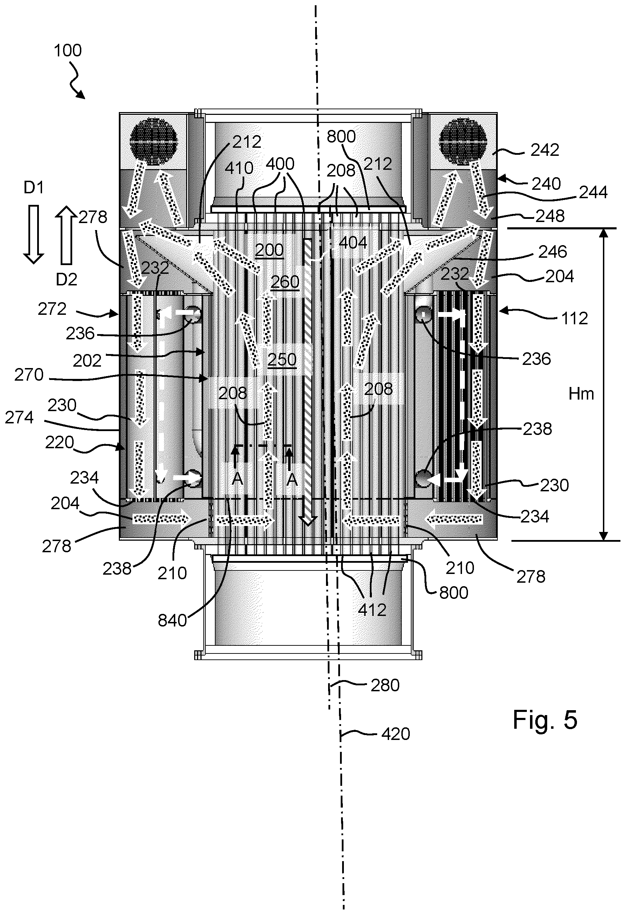

As shown in figures 3 to 5, the moderator fluid temperature control system 220 may comprise a moderator fluid heat transfer unit 230. The moderator fluid heat transfer unit 230 may have a heat transfer unit flow inlet 232 in flow communication with the moderator fluid tank fluid flow outlet 212. The moderator fluid heat transfer unit 230 may have a heat transfer unit flow outlet 234 in flow communication with the moderator tank fluid flow inlet 210. As illustrated in figure 5, the moderator fluid tank fluid flow outlet 212, the heat transfer unit flow inlet 232, the heat transfer unit flow outlet 234, the tank moderator fluid flow inlet 210 and the moderator fluid tank 202 may be provided in series to define a moderator fluid flow path 208. In figure 5 the first moderator fluid flow path 208 is indicated by arrows.

The nuclear reactor unit housing 272 may extend around the moderator fluid tank 202 and the moderator fluid heat transfer units 230.

As illustrated in figure 4, the nuclear reactor unit housing 272 (i.e. the moderator fluid flow duct 278) may at least in part define the moderator fluid flow path 208 between the moderator fluid tank fluid flow outlet 212 and the moderator tank fluid flow inlet 210. The nuclear reactor unit housing 272 (i.e. the moderator fluid flow duct 278) may at least in part define the moderator fluid flow path 208 between the moderator fluid tank fluid flow outlet 212 and the moderator tank fluid flow inlet 210 via the heat transfer unit flow inlet 232 and the heat transfer unit flow outlet 234.

The nuclear reactor unit housing 272 (i.e. the moderator fluid flow duct 278) (when filled with moderator fluid 204) serves as the primary neutron shielding of the reactor core 260 and also provides an initial reserve of moderator fluid 204 (and hence also cooling fluid) in the event that the reactor core 260 is shut down.

In normal use (as shown in the figures) the moderator tank fluid flow inlet 210 is located beneath the moderator fluid tank fluid flow outlet 212, and the moderator tank fluid flow inlet 210 is spaced apart from the moderator fluid tank fluid flow outlet 212 by a height Hm (as shown in figure 5) to define a moderator fluid flow reservoir region 250 therebetween.

There may be provided one or more moderator fluid heat transfer units 230, spaced apart around the moderator fluid tank wall 270. The moderator fluid tank 202 (i.e. the moderator fluid tank wall 270) may comprise a moderator tank fluid flow inlet 210 (configured for the passage of the moderator fluid 204 into the moderator fluid tank 202) and a moderator fluid tank fluid flow outlet 212 (configured for the passage of the moderator fluid 204 out of the moderator fluid tank 202) for each (i.e. in fluid communication with each of) the moderator fluid heat transfer units 230.

Each moderator fluid heat transfer unit 230 may have a heat transfer unit flow inlet 232 in flow communication with a moderator fluid tank fluid flow outlet 212. Each moderator fluid heat transfer unit 230 may have a heat transfer unit flow outlet 234 in flow communication with the moderator tank fluid flow inlet 210. As illustrated in figure 5, each combination of the moderator fluid tank fluid flow outlet 212, the heat transfer unit flow inlet 232, the heat transfer unit flow outlet 234, the moderator tank fluid flow inlet 210 and the moderator fluid tank 202 may be provided in series to define a first moderator fluid flow path 208. In figure 5 a pair of first moderator fluid flow paths 208 are indicated by arrows.

Hence, in an example in which a plurality of moderator fluid heat transfer unit 230 are provided, each may contribute to the temperature control of the moderator fluid 204, and each may contribute to circulation of the moderator fluid 204 around the moderator fluid tank 202.

As illustrated in figure 5 and figure 7, the or each moderator fluid heat transfer unit 230 may have a coolant flow inlet 236 and a coolant flow outlet 238.

As illustrated in figure 7, the (or each) fluid heat transfer unit coolant flow inlet 236 may be in heat transfer communication with a heat sink 700 via a first coolant duct 710, a first flow control valve 720 being provided in the first coolant duct 710.

The heat sink 700 may be any suitable source of cooling medium, for example the local atmosphere or a water source 2000 (e.g. a reservoir, lake, ocean).

Any appropriate fluid may be used as a coolant in the condenser 242 and moderator fluid heat transfer unit 230. By way of non limiting example, the fluid may be water, oil or gas.

The first flow control valve 720 may be controlled in response to (e.g. in dependence of) the pressure of the working fluid 404 entering the nuclear reactor unit 200. The first flow control valve 720 may be controlled such that if the pressure of the working fluid 404 entering the nuclear reactor unit 200 is below a predetermined value, the first flow control valve 720 is closed.

In addition, or alternatively, the first flow control valve 720 may be controlled in dependence of the temperature of the working fluid 404 entering the nuclear reactor unit 200. The first flow control valve 720 may be controlled such that if the temperature of the working fluid 404 entering the nuclear reactor unit 200 is above a predetermined value, the first flow control valve 720 is closed.

As best illustrated in figure 5, the nuclear fission reactor system 100 may further comprise a moderator fluid delivery system 240 comprising a condenser 242. The moderator fluid delivery system 240 may be configured to deliver moderator fluid 204 evaporated from the moderator fluid tank 202 by the nuclear reactor unit 200 to the condenser 242. The moderator fluid delivery system 240 may be configured to deliver condensate 244 back to the moderator fluid tank 202 via the moderator fluid heat transfer unit 230.

The moderator fluid delivery system 240 may comprise a moderator fluid tank fluid flow outlet duct 246 which extends between the moderator fluid tank 202 and the condenser 242. As shown in figure 5, the moderator fluid tank fluid flow outlet duct 246 may be configured, arranged and/or positioned to deliver evaporated moderator fluid 204 from the moderator fluid tank 202 to the condenser 242. As shown in figure 5, the moderator fluid tank fluid flow outlet duct 246 may be configured, arranged and/or positioned to deliver moderator fluid 204 from the moderator fluid tank 202 to the condenser 242.

The moderator fluid delivery system 240 may further comprise a moderator fluid heat transfer unit intake duct 248 which extends between the condenser 242 and the moderator fluid heat transfer unit 230.

As shown in figure 5, the moderator fluid heat transfer unit intake duct 248 may be configured, arranged and/or positioned to deliver condensed moderator fluid 204 from the condenser 242 to the moderator fluid heat transfer unit 230.

As shown in figure 5, the moderator fluid heat transfer unit intake duct 248 may be configured, arranged and/or positioned to deliver moderator fluid 204 from the condenser 242 to the moderator fluid heat transfer unit 230.

Hence in operation, moderator fluid 204, having travelled from the moderator tank fluid flow inlet 210 in a second direction D2 (as indicated by an arrow in figure 5) will exit the top of the moderator fluid tank 202 as either a liquid (in which case it will flow over the fluid flow outlet duct 246 into the heat transfer unit intake duct 248) or as a gas or vapour, (in which case it will be inducted into the condenser 242, condense, and then be drained into the heat transfer unit intake duct 248. In figure 5, the second direction D2 is vertically upwards, aligned with and/or parallel to the longitudinal axis 280.

Once in the heat transfer unit intake duct 248, the moderator fluid 204 will continue in the moderator fluid flow path 208 through the moderator fluid heat transfer unit 230 and back to the moderator tank fluid flow inlet 210.

As shown in figure 5, the fluid flow outlet duct 246 may be funnel shaped, expanding in diameter to define a flared top to the moderator fluid tank 202, and extending into the heat transfer unit intake duct 248. A gap is provided between the fluid flow outlet duct 246 and the heat transfer unit intake duct 248 to allow the passage of moderator fluid 204 past the exit from the fluid flow outlet duct 246 to the heat transfer unit intake duct 248.

As illustrated in figure 7, the condenser 242 may have a coolant flow inlet 243 and a coolant flow outlet 245. The condenser coolant flow inlet 243 may be in heat transfer communication with the heat sink 700 via a second coolant duct 726. The second coolant duct 726 may be in fluid communication with the heat sink 700 via a second flow control valve 722. The condenser coolant flow outlet 245 may be in fluid communication with (e.g. deliver coolant to) the heat sink 700 via a third coolant duct 724.

The coolant flow outlet 238 of the or each moderator fluid heat transfer unit 230 may be in fluid communication with (e.g. deliver coolant to) the heat sink 700 via a fourth coolant duct 734.

A pump 736 may be provided in one or more of the coolant ducts (for example the second coolant duct 726) to pump the coolant to/from the condenser 242 and the moderator fluid heat transfer unit 230.

The second flow control valve 722 may be controlled in response to (e.g. in dependence of) the temperature of the working fluid 404 exhausted from the nuclear reactor unit 200.

The second flow control valve 722 may be controlled such that the rate of coolant flow through the second flow control valve 722 and the second coolant duct 726 to the condenser coolant flow inlet 243 is controlled in dependence of the temperature of the working fluid 404 being exhausted from the nuclear reactor unit 200. The second flow control valve 722 may be controlled such that as the temperature of the working fluid 404 being exhausted from the nuclear reactor unit 200 increases, the flow of coolant to the condenser 242 is increased, and as the temperature of the working fluid 404 being exhausted from the nuclear reactor unit 200 decreases, the flow of coolant to the condenser 242 is decreased.

As illustrated in figure 7, the first coolant duct 710 may be in fluid communication with the second flow control valve 722 such that the first coolant flow control valve 720 is between the second flow control valve 722 and the fluid heat transfer unit coolant flow inlet 236 along the first coolant duct 710.

The second flow control valve 722 may be controlled in response to (e.g. in dependence of) the temperature of the working fluid 404 exhausted from the nuclear reactor unit 200.

The second flow control valve 722 may be controlled such that the rate of coolant flow through the second flow control valve 722 to the first coolant flow control valve 720 and the fluid heat transfer unit coolant flow inlet 236 is controlled in dependence of the temperature of the working fluid 404 being exhausted from the nuclear reactor unit 200. The second flow control valve 722 may be controlled such that as the temperature of the working fluid 404 being exhausted from the nuclear reactor unit 200 increases, the flow of coolant to the moderator fluid heat transfer unit 230 is decreased, and as the temperature of the working fluid 404 being exhausted from the nuclear reactor unit 200 decreases, the flow of coolant to the condenser 242 is increased.

The second flow control valve 722 may be in fluid communication with the heat sink 700 via a third flow control valve 728.

The third flow control valve 728 may be located in a third coolant duct 726 which extends between the heat sink 700 and the second flow control valve 722. The third flow control valve 728 may be controlled in dependence of the temperature of the nuclear reactor unit 200.

The third flow control valve 728 may be controlled such that as the temperature of the nuclear reactor unit 200 increases, the flow of coolant to the second flow control valve 722 (and hence to the moderator fluid heat transfer unit 230 and condenser 242) is increased, and as the temperature of the nuclear reactor unit 200 decreases, the flow of coolant to the second flow control valve 722 (and hence to the moderator fluid heat transfer unit 230 and condenser 242) is decreased.

Reactor core 260 reactivity protection is provided by the first flow control valve 720 and a fourth flow control valve 730. The first flow control valve 720 is operable to stop all coolant form the heat sink 700 to the moderator fluid heat transfer unit 230, in which event there is no subcooling of the moderator flow 204 entering the moderator fluid tank 202 such that boiling occurs at the bottom of the reactor core 260 which results in large moderator tank void fraction and insufficient moderator to allow fission reactions to occur. The first flow control valve 720 may be actuated by pressure generated from the compressor system 1004 and therefore the first flow control valve 720 can only open when the compressor system 1004 is in operation. Hence the first flow control valve 720 may be in fluid communication with a working fluid supply off take from the compressor system 1004 via a compressor offtake pipework 740, which terminates in a compressor offtake pipework 742 via the fourth flow control valve 730.

Additionally, the fourth flow control valve 730, which is configured to vent the gas pressure supply on the gas actuator which opens the moderator supply first flow control valve 720, is actuated on an over temperature signal from the gas flows exiting the reactor core 260. The fourth flow control valve 730 may be configured such that if the exit gas temperature at the heat source outlet 1002 exceeds a design set point, the fourth flow control valve 730 opens and causes the first flow control valve 720 to shut, stopping cooling flow to the moderator fluid heat transfer unit 230.

Hence the fourth flow control valve 730 may be controlled such that the rate of coolant flow through the first flow control valve 720 is controlled in dependence of the temperature of the working fluid 404 being exhausted from the nuclear reactor unit 200. The fourth flow control valve 730 may be controlled such that as the temperature of the working fluid 404 being exhausted from the nuclear reactor unit 200 increases, the flow of coolant to the moderator fluid heat transfer unit 230 is stopped entirely.

The first flow control valve 720 and the fourth flow control valve 730 are protective only and do not form a control system. i.e. they do not modulate reactivity. Instead, they shut the reactor core 260 down in event of a fault (e.g. failure of the turbine 1012, in which gas temperatures exiting the reactor core 260 are above design temperatures).

The third flow control valve 728 and the second flow control valve 722 form the active reactivity control system which modulates reactor core 260 reactivity to maintain an approximate constant reactor core 260 outlet temperature from low to high power. The third flow control valve 728 and the second flow control valve 722 do not form part of the reactivity protection system (which is provided by the first flow control valve 720 and the fourth flow control valve 730) and so the safety integrity of the valves may be reduced, which reduces the safety burden on the components.

The second flow control valve 722 may be controlled by a system which measures the reactor core 260 plenum gas outlet temperature and adjusts the cooling flow split going to the moderator fluid heat transfer unit 230 and the condenser 242. As the temperature in the gas exit plenum rises the electric actuator on the three-way valve is adjusted to reduce flow to the moderator fluid heat transfer unit 230 and increase flow to the condenser 242. By doing this the level of sub-cooling in the moderator fluid 204 entering the reactor core 260 is reduced causing boiling to occur lower in the reactor core 260 (i.e. the moderator fluid tank 202) and therefore increasing the steam void fraction in the reactor core 260 (i.e. moderator fluid tank 202) and reducing reactivity. The reactor core 260 (i.e. moderator fluid tank 202) temperature then cools off reducing heat flow to the moderator until the void fraction returns to the point where the reactivity returns to critical (i.e. a reactivity of the first flow control valve 720 implying no increase or fall in fission rate in the reactor core 260). The control on the second flow control valve 722 (by design) may vary flow very slowly as it is only there to adjust for long term fuel composition changes as the uranium is burnt (fission) in the reactor core 260 over time.

Heat loss to the moderator fluid 204 in the moderator fluid tank 202 is via both conduction losses from the fuel and neutron and gamma heating. Conduction losses are proportional to fuel temperature and independent of reactor core 260 power level, therefore if the reactor core 260 is at a constant temperature the heat load is unchanged irrespective of reactor core 260 power. Neutron and gamma heating is a direct function of reactor core 260 power and rises and falls in proportion to reactor core 260 power. Hence if the power of the reactor core 260 is reduced, the amount of heat lost to the moderator fluid tank 202 would fall and cause less voiding which would increase reactivity and require ever hotter temperatures in the reactor core 260 to compensate for the heat flow reduction loss from reduced gamma and neutron heating.

The function of the third flow control valve 728 is to correct, for this issue in a passive fashion, by throttling coolant flow out of the pump 736 if the amount of heat rejected to the condenser 242 is reduced, which is a direct function of the mass of steam generated in the reactor core 260. The actuator is self powered by a thermal actuator which works on the principle of thermal expansion of a fluid due to temperature change. Hence moderator fluid 204 boiling is reduced in the reactor core 260 when the third flow control valve 728 and actuator are operable to reduce the mass flow of moderator fluid 204 going to both the moderator fluid heat transfer unit 230 and the moderator condenser 242 which reduces sub cooling in the moderator fluid 204 and increases the rate of boiling in the moderator fluid tank 202, thereby correcting for reductions in heat flow to the moderator fluid 204 from the nuclear fuel.

The controller 222 may be configured to control, monitor and/or react in response to the state of the first flow control valve 720, the second flow control valve 722, the third flow control valve 728 and/or the fourth control valve 730.

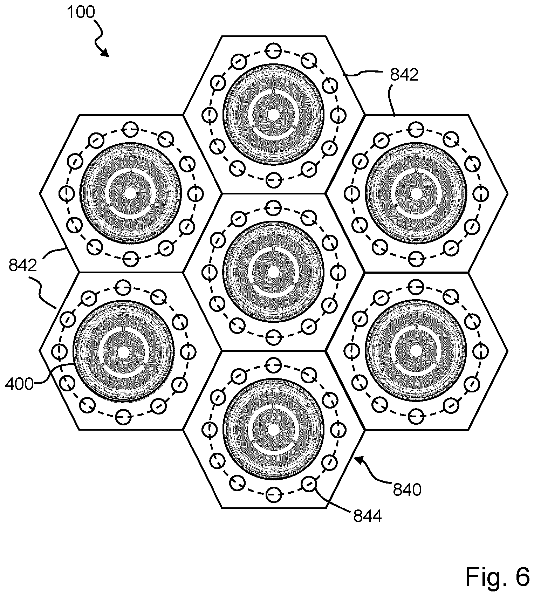

As illustrated in figures 5, 6, there may be provided a distributor plate 840 which extends across the moderator fluid tank 202. The distributor plate 840 may be provided proximate to the moderator tank fluid flow inlet 210, and between the moderator tank fluid flow inlet 210 and the moderator fluid tank fluid flow outlet 212. Hence the distributor plate 840 may define part of the first moderator fluid flow path 208. That is to say, the distributor plate 840 is configured to allow the passage of moderator fluid 204 therethrough. The distributor plate 840 is configured for supporting the or each fuel assembly 400 relative to, and spaced apart from, the moderator fluid tank wall 270. The distributor plate 840 is configured for supporting each fuel assembly 400 relative to, and spaced apart from, the or each other fuel assemblies 400.

Figure 6 shows a view on line A-A through the fuel assemblies 400 illustrated in Figure 5, and illustrates the distributor plate 840. A channel box 842 may be provided around each of the fuel assemblies 400. The channel box 842 may extend the full length of the fuel assembly 400 and/or along the full height of the moderator tank 202. Each fuel assembly 400 passed through an aperture in the distributor plate 840, and a plurality of moderator fluid apertures 844 are provided around each fuel assembly 400.

The plurality of moderator fluid apertures 844 may be evenly spaced apart around their associated fuel assembly 400. The plurality of moderator fluid apertures 844 may be unevenly spaced apart around their associated fuel assembly 400. The plurality of moderator fluid apertures 844 may all have the same diameter. At least one of the plurality of moderator fluid apertures 844 may have a different diameter to the others. The or each fuel assembly 400 may be located centrally in the channel box 842. The or each fuel assembly 400 may be offset from the centre of the channel box 842. Some or all of the fuel assemblies 400 may be offset from the centre of the channel box 842 with the remainder being located centrally in their associated channel box 842.

Varying the size and spacing of the moderator fluid apertures 844 and/or varying the relative position of the fuel assemblies 400 relative to the channel box 842 enables a reactor core 260 with an even power/heat output profile across the reactor 200 to be formed, without having to restrict flow through reactor core 260.

As illustrated in figures 4, 5, 6 and figures 8 to 12, the nuclear fission reactor system 100 may comprise a fuel assembly 400, the fuel assembly 400 comprising a pressure tube 402 configured for receiving a flow of a working fluid 404. The pressure tube 402 may define the outer surface of the fuel assembly 400. That is to say, the pressure tube 402 may contain the fuel compact units 500.

The pressure tube 402 is configured to extend through the moderator fluid tank 202 to define at least part of the moderator fluid flow path 208. The pressure tube 402 has a pressure tube flow inlet 410 and a pressure tube flow outlet 412. The pressure tube 402 is configured to define a fluid flow path 414 for working fluid 404 between the pressure tube flow inlet 410 and the pressure tube flow outlet 412 in a first direction D1 along the pressure tube 402. In figure 5, the first direction D1 is vertically downwards, aligned with and/or parallel to the longitudinal axis 280.

The nuclear reactor unit 200 may comprise a plurality of fuel assemblies 400 which each comprise a pressure tube 402 for receiving a flow of working fluid 404. Hence the plurality of fuel assemblies 400 may define the heat source 260. Hence there may be provided a plurality of pressure tubes 402.The plurality of pressure tubes 402 may be termed a "pressure tube bundle".

As shown in the examples, the pressure tube 402 (and hence the fuel assemblies 400) may be vertically, or substantially orientated, in normal use.

Each of the plurality of pressure tubes 402 extend through the moderator fluid tank 202. Each of the pressure tubes 402 have a pressure tube flow inlet 410 and a pressure tube flow outlet 412, each pressure tube 402 may be configured to define a fluid flow path 414 between the pressure tube flow inlet 410 and the pressure tube flow outlet 412 in the first direction D1 along the pressure tube 402.

A clearance is maintained between adjacent pressure tubes 402. The clearance may define at least part of a section of the moderator fluid flow path 208 which extends between the moderator tank fluid flow inlet 210 and the moderator fluid tank fluid flow outlet 212. The pressure tubes 402 are spaced apart from one another to define the clearance therebetween.

The portion of the first moderator fluid flow path 208 in the moderator fluid tank 202 (i.e. within the volume defined by the moderator fluid tank wall 270) flows in a second direction D2 along the outside of the (or each) pressure tube 402, the second direction D2 being in an opposite direction to the first direction D1.

In the examples shown, the moderator fluid tank 202 is cylindrical, although may be provided in any appropriate shape. That is to say, the moderator fluid tank wall 270 and the nuclear reactor unit outer wall 274 may each be cylindrical, although may be provided in any appropriate shape. The moderator fluid tank 202 may define a longitudinal axis 280 which extends along its length. The moderator fluid tank 202 may be centred on the moderator fluid tank longitudinal axis 280. In examples in which a plurality of moderator fluid heat transfer units 230 are provided, they may be spaced apart (for example spaced apart equally) around the moderator fluid tank longitudinal axis 280, between the moderator fluid tank wall 270 and the nuclear reactor unit outer wall 274 in the moderator fluid flow duct 278.

The or each pressure tube 402 is provided in the moderator fluid tank 202, and hence spaced apart from the moderator fluid heat transfer unit(s) 230 defined by the moderator fluid tank wall 270.

Hence the moderator fluid tank 202 and the fuel assemblies 400 define a reactor core 260.

The or each pressure tube 402 may be aligned with the moderator fluid tank longitudinal axis 280.

Hence in operation, the moderator fluid tank 202 which houses the pressure tubes 402, provides a heat removal route for decay heat transferred to the working fluid 404 within the moderator fluid tank 202 by conduction and thermal radiation. Essentially the pressure tubes 402 of the moderator fluid tank 202 act as heat transfer tubes for rejecting reactor core 260 decay heat.

The moderator fluid tank wall 270 and the nuclear reactor unit outer wall 274 may be concentric and centred on the moderator fluid tank longitudinal axis 280. The moderator fluid tank wall 270 and the nuclear reactor unit outer wall 274 may be co-axial, sharing the moderator fluid tank longitudinal axis 280 as a common axis.

A sheet of reflector material, for example lead, (not shown in the figures) may be provided around the inside of the moderator fluid tank 202 between the fuel assembly 400 (or plurality of fuel assemblies 400) and the moderator fluid heat transfer unit 230. That is to say, a sheet of reflector material (e.g. lead) may line the inside of the moderator fluid tank wall 270.

As shown in figure 4, the nuclear fission reactor system 100 may further comprise an enclosure unit 140 provided around (e.g. enclosing, bounding) the nuclear reactor unit outer wall 274.

The enclosure unit 140 may comprise (e.g. be defined by) a first enclosure unit wall 142 and a second enclosure unit wall 144, the second enclosure unit wall 144 located around and spaced apart from the first enclosure unit wall 142 to define an enclosure shielding volume 146 therebetween.

The first enclosure unit wall 142 may be spaced apart from the nuclear reactor unit outer wall 274 to define a cavity 160 therebetween. That is to say the cavity 160 (e.g. a space) may be provided between the reactor vessel (i.e. moderator fluid tank 202) and the reactor compartment wall 142. The cavity 160 may be terms a reactor compartment.

The enclosure shielding volume 146 may be configured (e.g. may be operable) to be in flow communication with a supply of moderator fluid 204. The moderator fluid 204 may be provided from any suitable reservoir. For example, the moderator fluid 204 may be held in a large tank external to the enclosure unit 140. The source of the moderator fluid 204 may be any readily available source of water, for example a lake, river or sea. Hence the moderator fluid 204 may be freshwater or seawater.

The enclosure shielding volume 146 may be in fluid communication with the moderator fluid tank 202 so as to enable a flow of moderator fluid 204 from the enclosure shielding volume 146 to the moderator fluid tank 202. As illustrated in figure 4, the enclosure shielding volume 146 may be in fluid communication with the moderator fluid tank 202 via a first pipe work 148, the first pipe work 148 extending from the enclosure shielding volume 146 to the moderator fluid tank 202 via the cavity 160.

As illustrated in figure 4, the enclosure shielding volume 146 is in fluid communication with the moderator fluid tank fluid flow outlet duct 246. The enclosure shielding volume 146 may be in fluid communication with the moderator fluid tank fluid flow outlet duct 246 via a second pipe work 152, the second pipe work 152 extending from the moderator fluid tank fluid flow outlet duct 246 to the enclosure shielding volume 146 through the cavity 160.

The second enclosure unit wall 144 may comprise a vent 150 to enable the exhaust of fluid (e.g. vapour and/or steam) from the enclosure shielding volume 146.

The moderator fluid temperature control system 220 is operable to control the moderator fluid heat transfer unit 230 to transfer heat to the moderator fluid 204 (and thereby increase its temperature) and/or to transfer heat from the moderator fluid 204 (and thereby reduce its temperature) to thereby control the temperature of the moderator fluid 204 at the moderator tank fluid flow inlet 210.

The aim of controlling the temperature of the moderator fluid 204 at the moderator tank fluid flow inlet 210 is to control the void fraction of the moderator fluid 204. The void fraction is the fraction of the volume of the moderator fluid tank 202 which is occupied by the gas phase of the moderator fluid 204.

The void fraction may be controlled by controlling whether the moderator fluid 204 within the moderator fluid tank 202 boils, and if so, the position along the fuel assemblies 400 (i.e. pressure tubes 402) within the moderator fluid tank 202 where the moderator fluid 204 begins to boil and therefore control the void fraction of the moderator fluid 204 in the moderator fluid tank 202 and hence the reactor core 260 reactivity.

In normal use (as shown in the figures) the moderator tank fluid flow inlet 210 is located beneath the moderator fluid tank fluid flow outlet 212, and the moderator tank fluid flow inlet 210 is spaced apart from the moderator fluid tank fluid flow outlet 212 by a height Hm to define a moderator fluid flow reservoir region 250 therebetween.

Hence the void fraction may be controlled by controlling the height above the moderator tank fluid flow inlet 210, between the moderator tank fluid flow inlet 210 and the moderator fluid tank fluid flow outlet 212, at which the moderator fluid 204 boils.

For example, if the moderator fluid 204 within the moderator fluid tank 202 boils closer to the moderator tank fluid flow inlet 210 than to the moderator fluid tank fluid flow outlet 212, then the void fraction of the moderator fluid tank 202 will be higher than if the moderator fluid 204 within the moderator fluid tank 202 boils closer to the moderator fluid tank fluid flow outlet 212 than to the moderator tank fluid flow inlet 210.

A greater void fraction results in the effectiveness of the moderator fluid 204 being reduced, and hence reduces the moderation of the reaction occurring within and between the fuel assemblies 400 in the reactor core 260 (i.e. the heat source 260). In this scenario the reactor core 260 (heat source 260) cools down and less power is output from the reactor core 260.

A lower void fraction results in the effectiveness of the moderator fluid 204 being increased, and hence increases the moderation of the reaction occurring within and between the fuel assemblies 400 in the reactor core 260 (i.e. the heat source 260). In this scenario the reactor core 260 (i.e. heat source 260) heats up and more power is output from the reactor core 260.

Hence control of the temperature of the moderator fluid 204 at the moderator tank fluid flow inlet 210 provides control of the power output of the reactor core 260.

In response to a control signal S to reduce the temperature of the nuclear reactor unit 200, the moderator fluid temperature control system 220 is operable to control the moderator fluid heat transfer unit 230 to transfer heat to the moderator fluid 204, or reduce the amount of heat removed, to increase the temperature of the moderator fluid 204 at the moderator tank fluid flow inlet 210.

In response to a control signal S to increase the temperature of the nuclear reactor unit 200 the moderator fluid temperature control system 220 is operable to control the moderator fluid heat transfer unit 230 to transfer heat from the moderator fluid 204 to reduce the temperature of the moderator fluid 204 at the moderator tank fluid flow inlet 210.

Hence a method of operation of the nuclear fission reactor system 100 of the present disclosure (e.g. the method by which its heat/power output is controlled) may be to control the temperature of the moderator fluid 204 at the moderator tank fluid flow inlet 210 to thereby control the temperature (e.g. the temperature gradient) of the moderator fluid 204 between the moderator tank fluid flow inlet 210 and the moderator fluid tank fluid flow outlet 212 and thereby control the vertical position where the moderator fluid 204 begins to boil and therefore control the void fraction of the moderator fluid 204 in the moderator fluid tank 202 and hence the reactor core 260 reactivity.

Heat removal from the moderator fluid tank 202 is via two methods operating in parallel. In a first method, the condenser 242 at the top of the reactor core 260 removes heat rejected through phase change of the moderator (boiling in the reactor core 260 and condensing on the surface condenser 242 to be rejected to the heat sink 700). In a second method the moderator fluid heat transfer units 230 remove heat from the moderator fluid 202, thereby cooling the moderator fluid 204 entering the bottom of the reactor core 260. Depending on the ratio of moderator heat rejection between sensible heat to latent heat, the fraction of steam voids in the reactor core 260 can be controlled.

This approach is highly effective and can control the amount of moderator fluid 204 in the reactor core 260 from around 20% to 100% enabling large changes in reactor core 260 reactivity. Furthermore, the fraction of heat needed to reject to the moderator fluid 204 to retain large void fraction is small, this allows the reactor core 260 to be kept subcritical at very low temperatures with small amounts of heat rejection. These attributes permit a simple control approach where either the coolant mass flow, or coolant inlet temperature can be finely controlled using a simple control valve system (as herein described).

Emergency reactivity shutdown is achieved passively through the negative temperature coefficient of reactivity of the fuel which results in a sub critical state for the plant in response to mean reactor core 260 temperature rise. Reductions in coolant flow lead directly to this state whilst complete stoppage of coolant flow would quickly lead to a sub critical reactor core 260 where re-criticality would only occur once the mean temperature of the reactor core 260 dropped sufficiently.

The control valve system for the moderator cooling loops is linked to the compressor pressure, as the compressor pressure is stopped the control valve stops coolant flow to the moderator fluid heat transfer units 230 so all cooling is only through the moderator surface condenser 242. In this state the reactor core 260 is rapidly moved to a sub critical state even at very low power levels, providing fast shutdown capability.

Aspects of the fuel assembly 400 of the reactor core 260 unit 200 are illustrated in figures 6, 8 to 12. The fuel assembly 400 may be located in the nuclear reactor unit 200 and form part of the heat source 260. During operation, the working fluid 404 passes through the fuel assembly 400. That is to say, the fuel assembly 400 defines at least part of the working fluid flow path between the heat source inlet 1000 and the heat source outlet 1002.

The fuel assembly 400 may extend along a longitudinal axis 420. The fuel assembly 400 may be centred on the longitudinal axis 420. The fuel assembly 400 may comprise a pressure tube 402 which may be centred on, and extend along, the longitudinal axis 420.

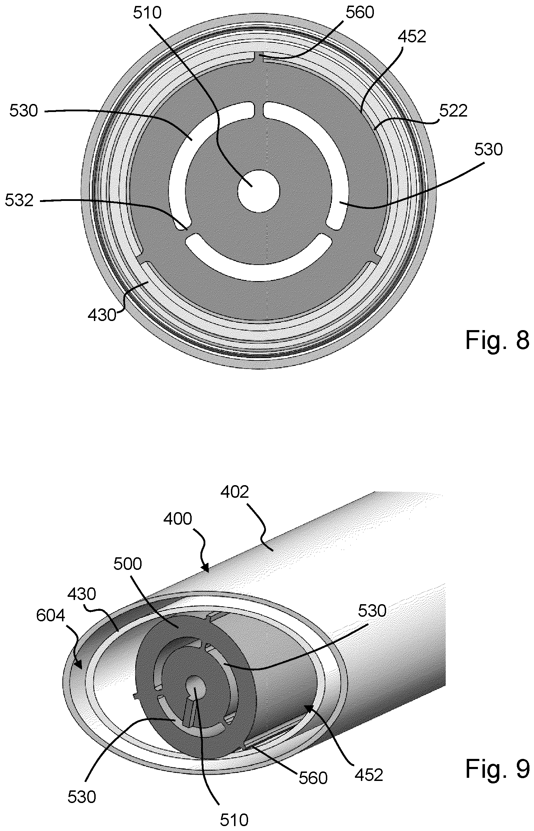

A fuel assembly 400 for a nuclear fission reactor system 100 according to the present disclosure is shown in figures 8 to 12. As illustrated, the fuel assembly 400 may extend along a longitudinal axis 420. The fuel assembly 400 may be centred on the longitudinal axis 420. The fuel assembly 400 may comprise a pressure tube 402. The pressure tube 402 may be centred on, and extend along, the longitudinal axis 420.

The fuel assembly 400 may comprise a **single** sleeve member 430 provided radially inward of a radially inner surface 432 of the pressure tube 402. The single sleeve member 430 may be centred on, and extend along, the longitudinal axis 420.

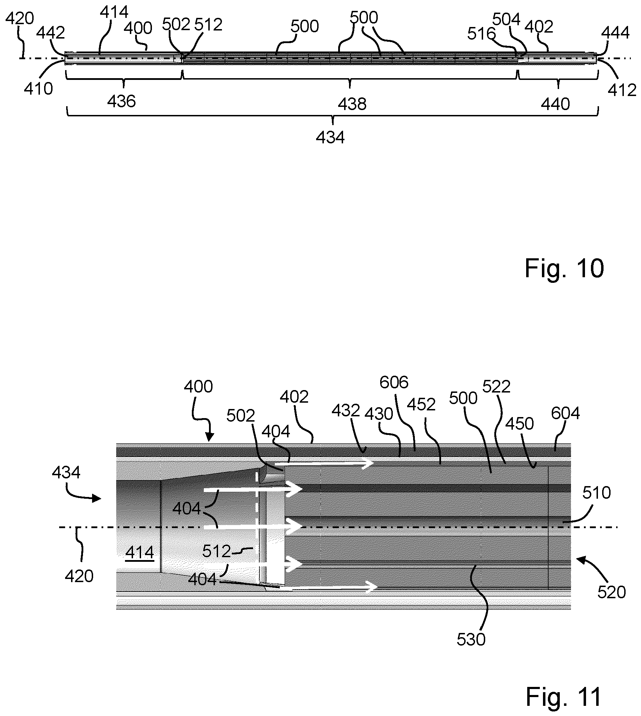

The sleeve member 430 may define a chamber 434 which extends along the length of the sleeve member 430. As illustrated in figure 10, the chamber 434 may comprise, in series, a first sub-chamber 436, a second sub-chamber 438 and a third sub-chamber 440, wherein the first sub-chamber 436 defines a chamber flow inlet 442 and the third sub-chamber 440 defines a chamber flow outlet 444.

The fuel assembly 400 may comprise a fuel compact unit 500 located in the second sub-chamber 438 within the sleeve member 430 such that a clearance gap 522 is maintained between a radially inner surface 450 of the sleeve member 430 and the fuel compact unit 500 to define a sleeve member flow passage 452. The fuel compact unit 500 may be centred on, and extend along, the longitudinal axis 420.

The fuel compact unit 500 comprises a fissionable material, for example Uranium-235.

The pressure tube 402, the sleeve member 430 and the fuel compact unit 500 may be arranged concentrically about the longitudinal axis 420. The pressure tube 402, the sleeve member 430 and the fuel compact unit 500 may be nested, with the fuel compact unit 500 spaced apart from the pressure tube 402 by the sleeve member 430.

The fuel compact unit 500 may be located within the sleeve member 430 such that a clearance gap 522 is maintained between a radially inner surface 450 of the sleeve member 430 and the fuel compact unit 500 to define a radiation shield flow passage 452 operable to receive working fluid 404. That is to say, during operation, working fluid 404 passes along the radiation shield flow passage 452.

The fuel compact unit 500 may extend from a first end 502 proximate to the first sub-chamber 436 to a second end 504 proximate to the third sub-chamber 440.

An insulation gap 604 is maintained between the pressure tube 402 and the single sleeve member 430. The insulation gap 604 may be configured for containing and retaining an insulation fluid 606.

That is to say, the sleeve member 430 is provided to form the insulation gap 604 between the sleeve member 430 and the pressure tube 402 which (in use) contains a stagnant (i.e. non flowing) insulating gas.

An insulation fluid 606 may be provided in the insulation gap 604. The insulation fluid 606 may be a low conductivity gas with a low neutron cross section. The insulation fluid 606 may comprise at least one of argon, air/nitrogen, carbon dioxide, krypton or xenon .

The insulation fluid 606 may be a different fluid to the working fluid 404. The insulation fluid 606 may be the same fluid as the working fluid 404.

The provision of a single sleeve member 430 means that a continuous insulation gap 604 may be formed between the fuel assembly 400 and the pressure tube 402 to ensure it remains a "dead" (i.e. stagnant) volume and there by act as insulation.

Since the sleeve member 430 is provided as a single long ceramic tube inside a pressure tube 402, it need only be sealed at either end, and hence it is easier to avoid leakage into or out of the insulation gap 604.

The insulation gap 604 reduces both thermal losses from conduction and convection whilst also preventing thermal radiative losses from the fuel.

A single fuel compact unit 500 may be located in the second sub-chamber 438. The fuel compact unit 500 may be integrally formed (e.g. monolithic). That is to say, the outer part of the fuel compact unit 500 and the inner part of the fuel compact unit 500 may be made of a single silicon carbide structure. In an alternative example the outer part of the fuel compact unit 500 and the inner part of the fuel compact unit 500 may be formed separately (e.g. the fuel compact unit 500 may be an assembly of two separate elements).

A nuclear reactor unit 200 according to the present disclosure for a nuclear fission reactor system 100 according to the present disclosure may comprise a fuel assembly 400 according to the present disclosure.

As illustrated in figures 8 to 11, the fuel compact unit 500 may define a first flow passage 510 for the passage of a working fluid 404 therethrough. The first flow passage 510 may extend from a flow inlet 512 provided at a first end 502 of the fuel compact unit 500 to a flow outlet 516 provided at a second end 504 of the fuel compact unit 500.

The fuel assembly 400 may be centred on the longitudinal axis 420. The first flow passage 510 may be centred on the longitudinal axis 420. During operation, working fluid 404 passes along the first flow passage 510.

As shown in figures 8 to 12, the fuel compact unit 500 may define a second flow passage 530 running from the flow inlet 512 to the flow outlet 516 of the fuel compact unit 500. The second flow passage 530 may be provided radially outwards of the first flow passage 510. During operation, working fluid 404 passes along the second flow passage 530.

The fuel compact unit 500 may define a plurality of second flow passages 530 running from the flow inlet 512 to the flow outlet 516 of the fuel compact unit 500. Hence there may be provided two or more flow passages 530 running from the flow inlet 512 to the flow outlet 516 of the fuel compact unit 500. There may be provided up to a maximum of six flow passages 530 running from the flow inlet 512 to the flow outlet 516 of the fuel compact unit 500. Each of the plurality of second flow passages 530 may be provided radially outwards of the first flow passage 510. Fin elements 532 may be provided between each of the second flow passages 530 to thereby divide the flow and support the outer part of the fuel compact unit 500 on the inner part of the fuel compact unit 500.

A plurality of fuel compact units 500 may be provided in series along the second sub-chamber 438 to form a fuel compact assembly 520, such that a clearance gap 522 is maintained between a radially inner surface 450 of the sleeve member 430 and each fuel compact unit 500 to define a sleeve member flow passage 452 along the length of the fuel compact assembly 520. The plurality of fuel compact units 500 may be arranged end to end with one another, and fixed relative to one another (e.g. so that there is no gap between adjacent fuel compact units 500.

The pressure tube 402 may comprise an aluminium or aluminium alloy. That is to say, the pressure tube 402 may be made from aluminium or aluminium alloy. The pressure tube 402 may be predominately manufactured from aluminium or aluminium alloy. The pressure tube 402 may be configured for reflecting thermal radiation generated by the fuel compact unit 500 back towards the fuel compact unit 500. That is to say, the pressure tube 402 may be configured as a thermal radiation shield. A pressure tube 402 made from aluminium may reflect 95% of thermal radiation back towards the fuel compact unit 500.

The sleeve member 430 may comprise fully stabilised zirconia (FSZ), alumina, alumina toughened zirconia, zirconia toughened alumina or silicon carbide. The fuel compact unit 500 may comprise fully stabilised zirconia (FSZ), alumina, alumina toughened zirconia, zirconia toughened alumina or silicon carbide.

That is to say, the sleeve member 430 and/or fuel compact unit 500 may be made from Fully Stabilised Zirconia (FSZ), Alumina, Alumina toughened zirconia, zirconia toughened alumina or silicon carbide. The sleeve member 430 and/or fuel compact unit 500 may be predominately manufactured from fully stabilised zirconia (FSZ), alumina, alumina toughened zirconia, zirconia toughened alumina or silicon carbide. The sleeve member 430 may comprise a coating or layer of Environment Barrier Coating. The fuel compact unit 500 may comprise a coating or layer of Environment Barrier Coating. For example, in examples in which the base material does not resist corrosion from water vapour at high temperature (e.g. silicon carbide) an environmental barrier coating may be advantageous to inhibit/prevent corrosion.

The sleeve member 430 may be predominately manufactured from silicon carbide and comprise a coating and/or layer of Environment Barrier Coating. The fuel compact unit 500 may be predominately manufactured from silicon carbide and comprise a coating and/or layer of Environment Barrier Coating (EBC).

With regard to the fuel compact unit 500, the use of ceramics (for example silicon carbide, alumina and/or zirconia) permits significantly higher packing fractions within the fuel compact unit 500 allowing higher uranium loadings for the same volume. Due to the use of nitrogen coolants, maximising the heavy metal content for a given heat transfer surface area is key to minimise the impact of depressurisation induced reactivity swings.

The Environment Barrier Coating for Silicon Carbide is configured for high temperature environments. The Environment Barrier Coating may comprise a two layer coat comprising a mullite bond coat (3Al2O₃ 2SiO2) and a top protective coat made up of Yttrium oxides, Aluminium oxides and/or Silicon oxides (Y₂O₃-Al₂O₃-SiO₂) (sometimes referred to as a YAS coating). Such coatings are durable and corrosion resistant. Additionally, the constituents provide a relatively low neutron cross section comparable to the base silicon carbide on a volume basis.

As illustrated in figures 8, 9, a first spacer element 560 may extend between the fuel compact unit 500 and the sleeve member 430 to locate the fuel compact unit 500 within the sleeve member 430 and maintain the clearance gap 522 therebetween to define the radiation shield flow passage 452. There may be provided a plurality of first spacer elements 560 spaced apart around the circumference of the fuel compact unit 500. The or each first spacer element 560 may be provided as a fin, an array of pin features or as a helical rib configured to enhance heat transfer to the working fluid flowing through the radiation shield flow passage 452.

A second spacer element (not shown in the figures) may extend between the sleeve member 430 and the pressure tube 402 to locate the sleeve member 430 within the pressure tube 402 to thereby maintain the insulation gap 604 therebetween. There may be provided a plurality of second spacer elements spaced apart around the circumference of the sleeve member 430.

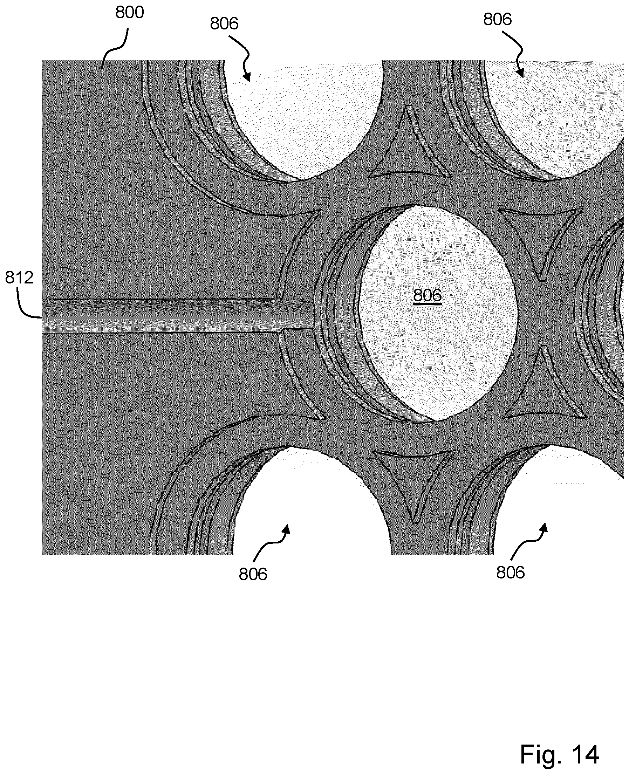

As illustrated in figure 5 and figures 12 to 14, the nuclear reactor unit 200 may comprise a support member 800. The support member 800 may also be referred to as a tube sheet.

As illustrated in figure 5, a support member 800 may extend across one or both ends of each fuel assembly 400. Hence a support member 800 may define an end wall of the moderator fluid tank 202. Hence two support members 800 may be provided spaced apart from one another along the moderator fluid tank longitudinal axis 280, to define opposite ends of the moderator fluid tank 202.

The support member 800 is configured for supporting the or each fuel assembly 400 relative to, and spaced apart from, the moderator fluid tank wall 270. The support member 800 is configured for supporting each fuel assembly 400 relative to, and spaced apart from, the or each of the other fuel assemblies 400.

The or each support member 800 may comprise a first side 802, a second side 804, and a location passage 806 which extends from a first opening 808 on the first side 802 of the support member 800 to a second opening 810 on the second side 804 of the support member 800.

In situ in the reactor core 260 the first side 802 may face into the moderator fluid tank 202. That is to say, the first side 802 may define an internal surface of the moderator fluid tank 202. The second side 804 may face away from the moderator fluid tank 202. That is to say, the second side 804 of the or each support member 800 may define an external surface of the moderator fluid tank 202.

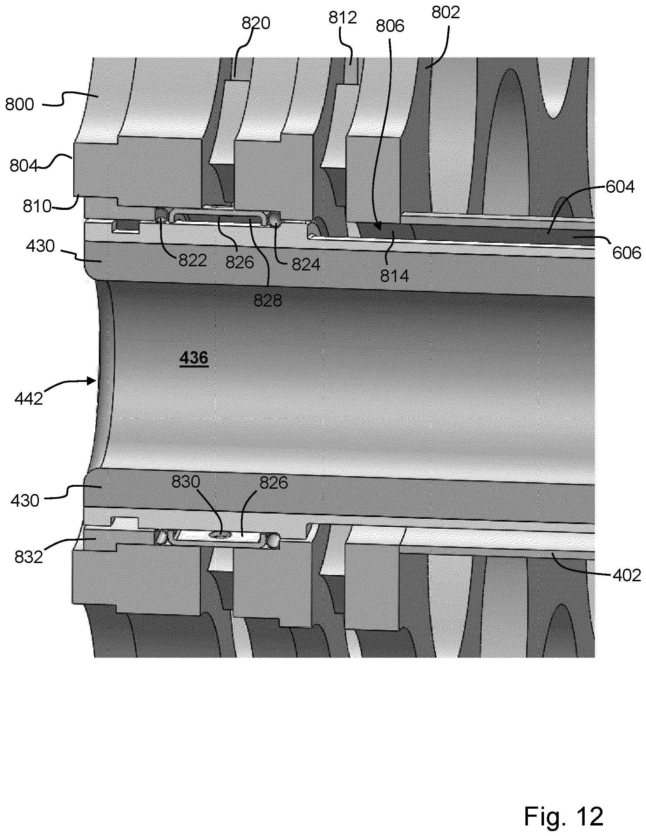

As illustrated in figure 12, the pressure tube 402 may extend from the first side 802 of the support member 800. The single sleeve member 430 may extend from the second side 804 of a support member 800 through the second opening 810, along the location passage 806, to the first opening 808. In such an arrangement, the chamber flow inlet 442 4 is proximate to the second opening 810 of the respective support member 800.

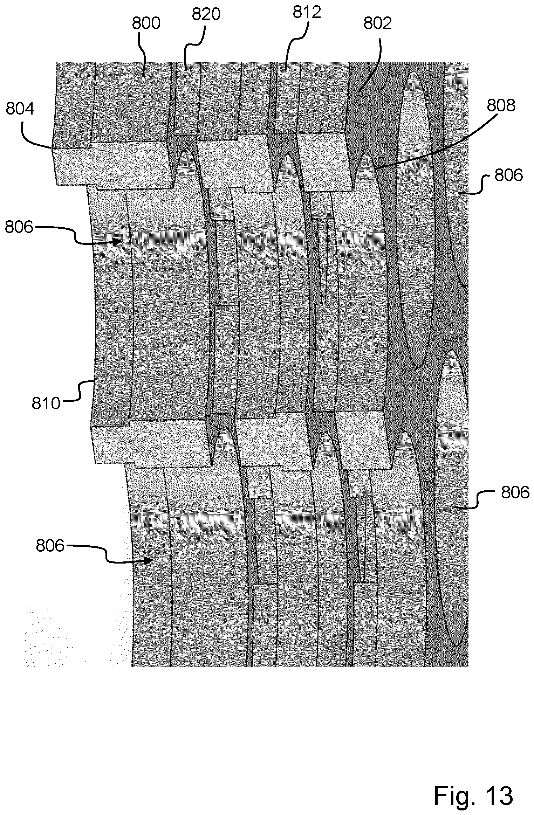

As shown in figures 12, 13 the support member 800 may define an insulator fluid supply passage 812 which may be in fluid communication with the insulation gap 604 and a source of insulator fluid 610 (not shown).

The insulator fluid supply passage 812 may be in fluid communication with the insulation gap 604 via a support member clearance gap 814 maintained between the single sleeve member 430 and the support member 800. The support member clearance gap 814 may form part of the location passage 806.

As illustrated in figure 12, a first seal 822 may be provided between the single sleeve member 430 and the support member 800 in the location passage 806, the first seal 822 being provided between the second side 804 and the insulator fluid supply passage 812 along the location passage 806.

A second seal 824 may be provided between the single sleeve member 430 and the support member 800 in the location passage 806, the second seal 824 being located between the first seal 822 and the insulator fluid supply passage 812 along the location passage 806, the second seal 824 being provided spaced apart from the first seal 822 along the location passage 806 to define a seal clearance volume 828 therebetween.

As illustrated in figures 12, 13, a nuclear reactor unit 200 and the support member 800 may define a working fluid vent passage 820 in fluid communication with the seal clearance volume 828 and a working fluid source 406.

As shown in figure 12, a seal spacer member 826 is provided between the first seal 822 and the second seal 824.

The seal spacer member 826 may span an opening to the working fluid vent passage 820. The seal spacer member 826 may define an aperture 830 for the passage of working fluid 404 therethrough.

Hence one end of the sleeve member 430 is open the supply of working fluid 404, and the seal spacer member 826 prevent gas leakage and flow through the insulation gap 604. This arrangement also reduces stresses on the sleeve member 430.

The support member 800 may define a plurality of location passages 806, at least some of the plurality of location passages 806 being in fluid communication with the insulator fluid source 610 via the insulator fluid supply passage 812 and/or at least some of the plurality of location passages 806 being in fluid communication with the working fluid vent passage 820.

At least some of the plurality of location passages 806 may be in fluid communication with the working fluid source 406 via the working fluid vent passage 820.

As illustrated in figure 12, a retainer plug 832 may be located at the second face 804 of the support member 800 to locate the single sleeve member 430 relative to the seal spacer member 826. A first seal 822 may be provided between seal spacer member 826 and the retainer plug 832. The retainer plug 832, the seal spacer member 826 and the second seal 824 may be provided in series along the location passage 806.

The chamber flow inlet 442 is operable to be in fluid communication with the working fluid source 406 (e.g. the heat source inlet 1000). The chamber flow outlet 444 is operable to be in fluid communication with a working fluid exhaust 408 (e.g. the heat source outlet 1002).

Hence, during operation, the working fluid 404 passes the heat source inlet 1000, through the chamber flow inlet 442 of the fuel assembly 400, along the fuel assembly 400 through the or each flow passage 510, 530, through the chamber flow outlet 444 to the heat source outlet 1002 along the flow passages 510, 530.

That is to say, the fuel assembly flow inlet 512 is operable to be in fluid communication with, and receive working fluid 404 from, the compressor-to-heat-source duct 1022, and the fuel assembly flow outlet 516 is operable to be in fluid communication with, and exhaust working fluid 404 to, the heat-source-to-turbine duct 1024.

Put another way, the fuel assembly 400 defines a part of the working fluid flow circuit 1020.

In operation of the heat engine system 300 of the present disclosure, the working fluid 404 comprises nitrogen and water vapour such that the working fluid 404 is humidified. That is to say, the relative humidity of the working fluid 404 may be 100%. The working fluid 404 is delivered to the compressor inlet 1008 at a predetermined range of pressure and temperature values to achieve desired efficiency of the heat engine.

The pressure of the working fluid 404 at the compressor inlet 1008 may be controlled to be in the range of 0 to 10 bar absolute. The pressure of the working fluid 404 at compressor inlet 1008 may be controlled to be in the range of 0 to 5 bar absolute. The pressure of the working fluid 404 at the compressor inlet 1008 may be controlled to be in the range of 1 to 5 bar absolute. The pressure of the working fluid 404 at the compressor inlet 1008 may be controlled to be about 1 bar absolute (i.e. atmospheric pressure).

The temperature of the working fluid 404 at compressor inlet 1008 may be controlled to be in the range of 0 deg C to 60 deg C. The temperature of the working fluid 404 at the compressor inlet 1008 may be controlled to be in the range of 0 deg C to 40 deg C. The temperature of the working fluid 404 at the compressor inlet 1008 may be controlled to be in the range of 5 deg C to 40 deg C. The temperature of the working fluid 404 at the compressor inlet 1008 may be controlled to be about 15 deg C.

The evaporation of the wet compression fluid added into the working fluid 404 causes a cooling effect which lowers the working fluid temperature at the compressor outlet 1010, thereby reducing the compressor work. The result is that more power is available on the turbine 1012 and a greater ability to recover heat from the recuperator, improving cycle efficiency and power density.

Hence there is provided a heat engine system 300 and/or the components and/or sub-systems of the heat engine system 300 which, in use, result in increased safety and efficiency of the heat engine system 300.

The nuclear fission reactor system 100 of the present disclosure allows for control of the nuclear reactor unit 200, and hence power output, by virtue of being able to control the void fraction in the moderator tank 202 (e.g. by controlling the height in the moderator tank at which boiling of the moderator fluid 204 occurs.

Additionally, a nuclear fission reactor system 100 of the present disclosure is advantageous by virtue of its failsafe design, for example if the moderator fluid 204 ceases to flow or is lost, then the nuclear reaction within the nuclear reactor unit 200 will slow down.

Even if coolant supply to the moderator fluid heat transfer unit 230 and/or condenser 242 is lost, and the system is unable to cool the temperature of the moderator fluid 204, the system is inherently self stabilising since a higher void fraction will result in less reactivity.

Hence there is provided a nuclear fission reactor system 100 which, in use, is more efficient and more safe than examples of the related art.

The fuel assembly 400 of the present disclosure is an inherently simpler structure to assemble (having fewer sealing arrangement than examples of the related art) and provides a sealed insulated gap which enables the use of preferential insulator materials. For example, an insulator gas (for example argon) may be chosen that is different to that of the working fluid 404 (for example, nitrogen).

The fuel assembly 400 is configured to enable the nuclear fission reactor system 100 to operate at conditions to support the wet compression operability of the heat engine system 300. Put another way, the fuel assembly 400 of the present disclosure is configured to enable the compressor 1004 of the heat engine to operate under a wet compression closed cycle.

In examples of the present disclosure, the use of a water moderator/coolant (which, for example, may be unpressurised) enables the structure of the reactor core 260 unit 200 to operate at low temperatures with low cost aluminium construction while the thermal radiation reflective properties of aluminium coupled with the fuel compact unit 500 of the present disclosure enable high reactor core 260 outlet gas temperatures permitting high plant efficiency.

Additionally, the materials of construction (e.g. aluminium and zirconia) are tolerant to oxidising environments allowing the potential for wet compression systems where the working fluid contains a significant percentage of water vapour which within High Temperature Gas cooled reactor core 260 plants of the related art (which, for example, may contain graphite structures) would be rapidly oxidised.

The fuel compact unit 500 may be operating at a temperature of about 1300degC. The pressure tube 402 is kept at a cool temperature well below its melting point by the coolant/moderator fluid which surrounds it, actively cooling the tube 402 to a temperature close to the moderator/coolant temperature (100degC). Aluminium is ideally suited to this, as it has a constant low thermal emissivity, and is highly resistant to oxidation even at high temperature. The moderator fluid 204 around the outside of the pressure tube 402 maintains the aluminium at below its melting point.

Additionally, the choice of materials of the fuel assembly 400 of the present disclosure also enables the use of water (for example demineralised water) as the first coolant, which is readily available.

Aluminium and/or aluminium alloys are inherently less prone to corrosion than other materials conventionally used in this application, as well as being highly tolerant of radiation. Additionally, in these applications the pressure tubes 402 are operating at a temperature which is close to the melting point (i.e. annealing point) of aluminium, meaning that at these operating conditions aluminium or aluminium alloy has a high tolerance to radiation damage (for example higher temperature steel), such that the pressure tubes 402 of the present disclosure operated at these lower temperature will inherently have a longer life than those of the related art. Additionally aluminium is highly thermally conductive and hence aids with temperature management of the nuclear fission reactor system 100. Another consideration is that aluminium alloys are also relatively low cost compared to more exotic materials that may be used in the construction of pressure tubes 402 for a nuclear fission reactor system 100.

Zirconia is also inherently less prone to corrosion than other materials conventionally used for reactor core 260 and fuel construction materials and the sleeve member 430. Thus, use of a zirconia matrix as part of the fuel assembly 400 enables wet compression.

Operating the heat engine to operate a wet compression process gives thermal efficiency (for example 45% - 50% thermal efficiency) and improved power density (for example 1.5-2 times power increase) compared to examples of the related art where wet compression is not used. Conventional heat engine systems including a nuclear fission reactor system are not run using wet compression because of problems related to corrosion of the reactor core 260 structural materials and the high temperature operation required for gas turbine technologies.

The arrangement of the present disclosure is configured to improve the safety of a nuclear fission reactor system 100, with used in combination with, or independently of, the fuel assembly 400 and closed cycle heat engine wet compression configuration of the present disclosure.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A nuclear fission reactor system provided with a nuclear reactor unit, the nuclear reactor unit comprising:
a moderator fluid tank for containment of a moderator fluid;
the moderator fluid tank comprising a moderator tank fluid flow inlet and a moderator fluid tank fluid flow outlet;
the nuclear fission reactor system further comprising a moderator fluid temperature control system operable to control the temperature of the moderator fluid at the moderator tank fluid flow inlet.

2. A nuclear fission reactor system as claimed in claim 1 wherein the moderator fluid temperature control system comprises a moderator fluid heat transfer unit having:
a heat transfer unit flow inlet in flow communication with the moderator fluid tank fluid flow outlet; and
a heat transfer unit flow outlet in flow communication with the moderator tank fluid flow inlet,
the moderator fluid tank fluid flow outlet, the heat transfer unit flow inlet, the heat transfer unit flow outlet, the moderator tank fluid flow inlet and the moderator fluid tank are provided in series to define a first moderator fluid flow path.

3. A nuclear fission reactor system as claimed in claim 2 wherein:
the moderator fluid heat transfer unit has a coolant flow inlet and a coolant flow outlet;
the fluid heat transfer unit coolant flow inlet being in heat transfer communication with a heat sink via a first coolant duct, a first flow control valve being provided in the first coolant duct; the first flow control valve being controlled in response to:
the pressure of working fluid entering the nuclear reactor unit; such that if the pressure of the working fluid entering the nuclear reactor unit is below a predetermined value, the first flow control valve is closed; and/or the temperature of the working fluid entering the nuclear reactor unit; such that if the temperature of the working fluid entering the nuclear reactor unit is above a predetermined value, the first flow control valve is closed.

4. A nuclear fission reactor system as claimed in claim 2 or claim 3 further comprising a moderator fluid delivery system comprising a condenser, the moderator fluid delivery system configured to:
deliver the moderator fluid evaporated from the moderator fluid tank by the nuclear reactor unit to the condenser, and
deliver condensate back to the moderator fluid tank via the moderator fluid heat transfer unit.

5. A nuclear fission reactor system as claimed in claim 4 wherein the moderator fluid delivery system comprises:
a moderator fluid tank fluid flow outlet duct which extends between the moderator fluid tank and the condenser; and
a moderator fluid heat transfer unit intake duct which extends between the condenser and the moderator fluid heat transfer unit.

6. A nuclear fission reactor system as claimed in claim 4 when dependent on claim 3, or as claimed in claim 5 wherein:
the condenser has a coolant flow inlet and a coolant flow outlet;
the condenser coolant flow inlet being in heat transfer communication with the heat sink via a second coolant duct;
the second coolant duct being in fluid communication with the heat sink via a second flow control valve;
the second flow control valve being controllable in response to the temperature of the working fluid exhausted from the nuclear reactor unit; such that the rate of coolant flow through the second flow control valve and the second coolant duct to the condenser coolant flow inlet is controlled in dependence of the temperature of the working fluid being exhausted from the nuclear reactor unit.

7. A nuclear fission reactor system as claimed in claim 6 wherein:
the first coolant duct is in fluid communication with the second flow control valve such that the first coolant flow control valve is between the second flow control valve and the fluid heat transfer unit coolant flow inlet along the first coolant duct;
the second flow control valve being controllable in response to the temperature of the working fluid exhausted from the nuclear reactor unit; such that the rate of coolant flow through the second flow control valve to the first coolant flow control valve and the fluid heat transfer unit coolant flow inlet is controlled in dependence of the temperature of the working fluid being exhausted from the nuclear reactor unit.

8. A nuclear fission reactor system as claimed in claim 7 wherein:
the second flow control valve is in fluid communication with the heat sink via a third flow control valve; and
the third flow control valve is controllable in dependence of the temperature of the nuclear reactor unit.

9. A nuclear fission reactor system as claimed in any one of claims 2 to 8 and further comprising:
a nuclear reactor unit outer wall which extends around the moderator fluid tank to define a nuclear reactor unit housing operable to retain the moderator fluid;
the nuclear reactor unit housing at least in part defining the first moderator fluid flow path between the moderator fluid tank fluid flow outlet and the moderator tank fluid flow inlet.

10. A nuclear fission reactor system as claimed in claim 9 further comprising an enclosure unit provided around the nuclear reactor unit housing;
the enclosure unit defining a first enclosure unit wall and a second enclosure unit wall, the second enclosure unit wall located around and spaced apart from the first enclosure unit wall to define an enclosure shielding volume therebetween; and
the enclosure shielding volume is configured to be in flow communication with a supply of the moderator fluid.

11. A nuclear fission reactor system as claimed in claim 9 or claim 10 wherein:
the enclosure shielding volume is in fluid communication with the moderator fluid tank so as to enable a flow of the moderator fluid from the enclosure shielding volume to the moderator fluid tank.

12. A nuclear fission reactor system as claimed in any one of claims 9 to 11 when dependent on claim 5, wherein the enclosure shielding volume is in fluid communication with the moderator fluid tank fluid flow outlet duct; and
the second enclosure unit wall comprises a vent to enable the exhaust of fluid from the enclosure shielding volume.

13. A nuclear fission reactor system as claimed in any one of claims 2 to 12 further comprising a fuel assembly located in the moderator fluid tank,
the fuel assembly configured to define a fluid flow path for working fluid between a pressure tube flow inlet and a pressure tube flow outlet in a first direction (D1) along a pressure tube; and
the portion of the first moderator fluid flow path in the moderator fluid tank flows in a second direction (D2), the second direction (D2) being in an opposite direction to the first direction (D1).

14. A nuclear fission reactor system as claimed in any one of claims 2 to 13 wherein the moderator fluid temperature control system is operable to control the moderator fluid heat transfer unit to transfer heat to the moderator fluid and/or to transfer heat from the moderator fluid to thereby control the temperature of the moderator fluid at the moderator tank fluid flow inlet.

15. A method of control of a nuclear fission reactor system provided with a nuclear reactor unit, the nuclear reactor unit comprising:
a moderator fluid tank for containment of a moderator fluid;
the moderator fluid tank comprising a moderator tank fluid flow inlet and a moderator fluid tank fluid flow outlet;
the nuclear fission reactor system further comprising a moderator fluid temperature control system operable to control the temperature of the moderator fluid at the moderator tank fluid flow inlet;
the method comprising:
controlling the temperature of the moderator fluid at the moderator tank fluid flow inlet to thereby control the temperature of the moderator fluid between the moderator tank fluid flow inlet and the moderator fluid tank fluid flow outlet.
